# FASCICULE DE BREVET EUROPEEN

(11) **EP 2 521 663 B1**
(45) Date de publication et mention de la délivrance du brevet: **26.02.2014**
(21) Numéro de dépôt: 10796051.0
(22) Date de dépôt: 21.12.2010
(51) Int. Cl.: B60R 1/12

(54) **DISPOSITIF DIFFRACTIF DE SIGNALISATION POUR RÉTROVISEUR AVEC AFFICHAGE 2D/3D**
DIFFRAKTIVE SIGNALISIERUNGSVORRICHUTUNG FÜR EINEN RÜCKSPIEGEL MIT 2D-/3D-ANZEIGE
DIFFRACTIVE SIGNALING DEVICE FOR A REARVIEW MIRROR HAVING A 2D/3D DISPLAY

(30) Priorité: 06.01.2010 FR 1050046
(43) Date de publication de la demande: 14.11.2012
(73) Titulaire: Delphi Technologies, Inc., Troy, MI 48007 (US); Université de Strasbourg, 67081 Strasbourg Cedex (FR)
(72) Inventeur: MOUSSA, Hassan, F-67400 Illkirch (FR); EL HAFIDI, Idriss, F-67400 Illkirch-Graffenstaden (FR); TUPINIER, Laurent, F-67116 Reichstett (FR)
(74) Mandataire: Robert, Vincent
(86) Numéro de dépôt international: PCT/EP2010/070410
(87) Numéro de publication internationale: WO 2011/083042

(56) Documents cités:
- EP-A1- 1 591 314
- WO-A2-2006/101580
- US-A- 5 165 772
- US-A- 5 938 320
- US-A1- 2007 058 257

## Description

### DOMAINE TECHNIQUE

La présente invention concerne un dispositif diffractif de signalisation pour rétroviseur avec affichage 2D/3D notamment pour véhicule terrestre à moteur.

### ARRIERE-PLAN TECHNOLOGIQUE DE L'INVENTION

La présente invention concerne plus particulièrement un dispositif de rétrovision pour un véhicule terrestre à moteur comportant :
- un élément réflectif formant miroir qui permet à un utilisateur principal d'observer une zone située en arrière du dispositif de rétrovision, et
- un système d'affichage lumineux comprenant au moins une première source lumineuse et au moins un dispositif optique permettant d'orienter le faisceau lumineux produit par la source suivant une direction déterminée orientée vers l'arrière et située en dehors du champ de vision de l'utilisateur principal (le conducteur) en vue d'afficher au moins un premier signal lumineux dans la zone de rétrovision, ledit premier signal lumineux étant destiné à être vu par des observateurs autres que l'utilisateur principal (conducteurs d'autres véhicules).

Un tel type de dispositif est décrit par exemple dans le document US5436741. Dans ce document, le miroir est monté par sa face avant sur un support qui est pourvu d'un logement contenant une lampe à filament. Le miroir est partiellement transmissif et comporte sur sa face avant, en vis-à-vis du logement, une plaquette transparente pourvue d'un élément holographique destiné uniquement à orienter et contrôler l'angle de divergence des rayons lumineux émis par la lampe avec une divergence définie.

Ce dispositif présente certains inconvénients. En effet, le système d'affichage lumineux est relativement encombrant et il ne produit qu'un signal lumineux relativement flou. Par ailleurs, il nécessite l'utilisation d'un miroir partiellement transmissif ce qui d'une part augmente le coût du miroir et dégrade la fonction « rétrovision », et d'autre part augmente la consommation énergétique en raison de la perte due à la transmissivité partielle du miroir. Aussi, le fait que le miroir doit être semi réfléchissant dans la zone d'affichage implique que, dans le cas d'accumulation de la poussière sur la surface du miroir, la luminosité sera réduite et dans certains cas la signalisation sera invisible.

Il faut aussi noter que dans l'art antérieur deux types de signalisation étaient envisagées :
- absence de forme de signalisation (la fonction dans ce cas est réduit à l'éclairage d'une zone dans le rétroviseur sans aucune forme : flèche ou autre) ; Avec une limitation liée à la nécessité de positionner la source de lumière dans un endroit précis du rétroviseur.
- un guide de lumière traçant la forme de la signalisation (flèche, triangle ou autre) avec un ensemble de plusieurs sources lumineuses. Ceci constitue une limitation majeure car à chaque symbole doit correspondre un guide donc pour plusieurs symboles il faut avoir un encombrement suffisant pour intégrer les guides à des endroits distincts ce qui est très difficile et nécessite un encombrement largement supérieur à l'encombrement disponible dans un rétroviseur, en plus de la nécessité d'avoir plusieurs sources d'éclairage impliquant un niveau de consommation électrique élevé et un problème de dissipation thermique.

### RESUME DE L'INVENTION

La présente invention vise à résoudre les problèmes mentionnés ci-dessus en proposant une solution compacte ayant une efficacité énergétique élevée et donc plus économique, tout en offrant la possibilité de réaliser des fonctions d'affichage supplémentaires en respectant l'encombrement habituel du rétroviseur et sans introduction de modifications à son architecture.

Dans ce but, la présente invention propose un dispositif diffractif de signalisation pour rétroviseur avec affichage 2D/3D notamment pour véhicule terrestre à moteur. Plus précisément, le dispositif de signalisation est prévu pour être agencé sur l'élément réflectif formant miroir d'un dispositif de rétrovision. Le dispositif de rétrovision permet à un utilisateur principal d'observer par réflexion une zone située en arrière du dispositif de rétrovision. Le dispositif de signalisation comprend au moins un module d'illumination et au moins un dispositif optique permettant d'orienter le faisceau lumineux produit par le module d'illumination suivant une direction déterminée orientée vers l'arrière et située en dehors du champ de vision de l'utilisateur principal en vue d'afficher au moins un premier symbole lumineux de signalisation dans la zone de rétrovision définie par le dispositif de rétrovision. Le premier symbole lumineux est destiné à être vu exclusivement par des observateurs autres que l'utilisateur principal.

Conformément aux enseignements de l'invention, le dispositif de signalisation est caractérisé en ce que le dispositif optique comporte un module générateur de symboles qui est pourvu d'au moins un réseau diffractif prévu pour former une image lumineuse correspondant au premier symbole lumineux lorsque le module d'illumination est allumé, ledit module générateur de symboles étant globalement transparent et ledit réseau diffractif étant réalisé à la surface dudit module sans en affecter sa transparence, et en ce que le module d'illumination est agencé par rapport au module générateur de symboles de manière que le faisceau lumineux entre dans le module générateur de symboles par son bord périphérique externe avant d'être ensuite diffracté vers l'arrière par le réseau diffractif pour former le premier symbole lumineux.

Le dispositif selon l'invention présente l'avantage d'être particulièrement compact et de ne nécessiter que très peu d'éléments. En particulier, le module d'illumination ajoute très peu d'épaisseur au miroir, ce qui permet de réaliser un rétroviseur très mince et/ou ce qui facilite l'intégration du système d'éclairage lumineux dans le rétroviseur sans aucune modification de son architecture, notamment en combinaison avec le dispositif électrique de correction de l'orientation du miroir présent sur la plupart des rétroviseurs, et ceci tout en offrant la possibilité d'afficher un grand nombre de symboles de signalisation bidimensiomiels ou tridimensionnels grâce à la formation de symboles lumineux sous forme d'hologrammes.

De plus, le rendement énergétique du système de signalisation selon l'invention est particulièrement élevé ce qui permet d'obtenir des signaux très lumineux avec une seule source lumineuse telle qu'une diode électroluminescente. Aussi, le système selon l'invention ne nécessite pas une modification du processus de fabrication d'assemblage du rétroviseur classique.

Selon d'autres caractéristiques avantageuses de l'invention :
- le module d'illumination comporte une interface optique qui est agencée entre une source lumineuse et le bord périphérique externe du module générateur de symboles, ladite interface optique collectant les rayons lumineux émis par la source lumineuse et les propageant à travers le bord périphérique externe ;
- l'interface optique comporte un réflecteur qui collecte les rayons lumineux émis par la source lumineuse et qui les dirige vers un prisme adjacent au bord périphérique externe du module générateur de symboles ;
- le module générateur de symboles comporte au moins un premier et un second réseaux diffractifs correspondant respectivement à un premier et un second symboles lumineux, et le dispositif de signalisation comporte un premier et un second modules d'illumination qui produisent respectivement un premier et un second faisceaux lumineux entrant dans le module générateur de symboles suivant une première et une seconde directions distinctes non parallèles, le premier et le second faisceaux lumineux coopérant respectivement avec le premier et le second réseaux diffractifs pour produire respectivement le premier et le second symboles lumineux ;
- les deux réseaux diffractifs comportent au moins une zone de recouvrement à la surface du module générateur de symboles de manière que les deux symboles lumineux associés puissent être affichés au moins en partie dans la même zone du module générateur de symboles ;
- chaque réseau diffractif est réalisé en relief par un processus d'enregistrement analogique d'interférences ;
- chaque réseau diffractif est réalisé à partir d'une figure d'interférence générée par ordinateur et qui correspond à la combinaison des interférences correspondant au symbole lumineux à générer ;
- chaque réseau diffractif est généré par ordinateur et implémenté sur le milieu transparent formant le module générateur de symboles par des techniques de microfabrication ;
- le module générateur de symboles est réalisé en plastique transparent et le réseau diffractif est réalisé sur la surface dudit module générateur de symboles par embossage ou injection plastique.

L'invention propose aussi un dispositif de rétrovision de véhicule terrestre à moteur, tel qu'un rétroviseur extérieur, caractérisé en ce qu'il est équipé d'un dispositif de signalisation selon l'une quelconque des caractéristiques précédentes, le module générateur de symboles étant agencé sur la face externe de l'élément réflectif.

Selon des modes de réalisation avantageux, le symbole lumineux associé au premier réseau diffractif correspond à une indication de changement de direction du véhicule et le symbole lumineux associé au second réseau diffractif correspond à une indication d'allumage des feux de stop du véhicule.

D'autres symboles peuvent être rajoutés, par exemple des signaux de détresse, en superposant des réseaux diffractifs supplémentaires.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue de dessus qui représente schématiquement un véhicule automobile principal équipé de rétroviseurs extérieurs munis de dispositifs de signalisation réalisés conformément aux enseignements de l'invention ainsi qu'un second véhicule situés à l'arrière gauche du véhicule principal ;
- la figure 2 est une vue éclatée qui représente le rétroviseur gauche du véhicule principal de la figure 1 ;
- la figure 3 est une en perspective qui représente schématiquement le rétroviseur de la figure 2 lorsqu'un premier symbole lumineux est affiché par le dispositif de signalisation ;
- la figure 4 est une vue similaire à celle de la figure 3 qui représente le rétroviseur lorsqu'un second symbole lumineux est affiché par le dispositif de signalisation ;
- la figure 5 est une vue en coupe selon le plan 5-5 qui représente schématiquement le dispositif de signalisation équipant le rétroviseur de la figure 2 et incluant un module générateur de symboles ainsi qu'un module d'illumination ;
- la figure 6 est une vue de détail d'une partie de la figure 5 qui représente le module d'illumination de la figure 5 et son interface optique.

### DESCRIPTION DES MODES DE REALISATION PREFERES

Dans la suite de la description, des éléments identiques ou similaires seront désignés par les mêmes références.

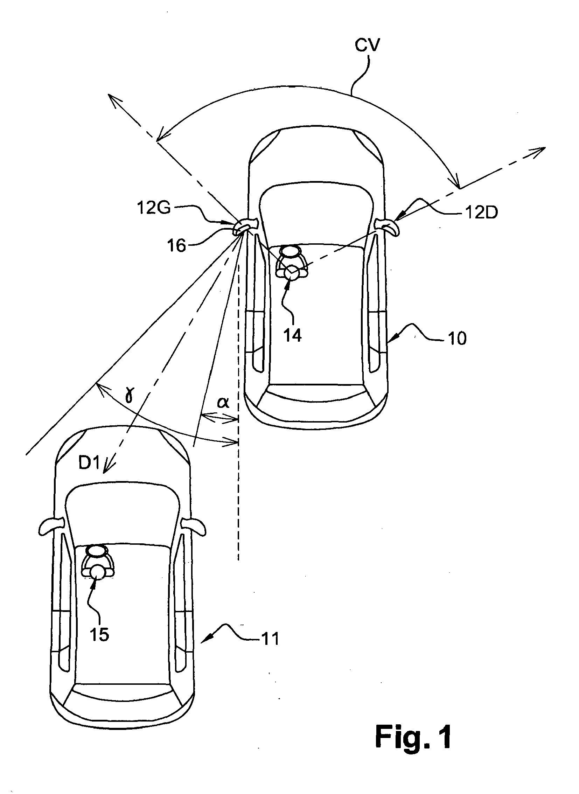

Sur la figure 1 on a représenté schématiquement un véhicule automobile 10 équipé de dispositifs de rétrovision 12 conformes aux enseignements de l'invention. Les dispositifs de rétrovision 12 sont constitués ici par un rétroviseur extérieur gauche 12G et par un rétroviseur extérieur droit 12D.

Dans la suite de la description, on utilisera à titre non limitatif une orientation d'avant en arrière suivant le sens de déplacement en marche avant du véhicule 10 et qui correspond à une orientation du haut vers le bas sur la figure 1.

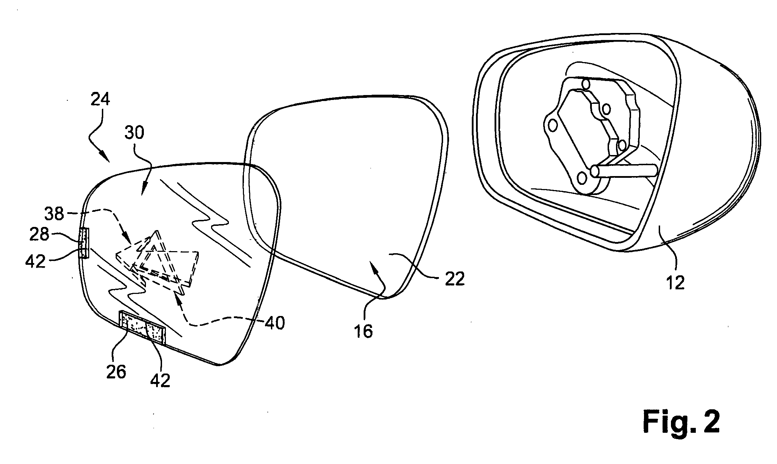

Chaque dispositif de rétrovision 12 est prévu pour permettre à l'utilisateur principal, ici le conducteur 14, de visualiser dans son champ de vision CV une zone latérale située vers l'arrière du véhicule 10. A cet effet, chaque dispositif de rétrovision 12, qui est représenté plus en détail sur les figures 2 à 4, comporte un élément réflectif formant miroir 16 en forme de plaque.

Conformément aux enseignements de l'invention, chaque dispositif de rétrovision 12 est équipé d'un dispositif de signalisation 24 qui comporte au moins un module d'illumination 26, 28 et un dispositif optique constituant un module générateur de symboles de signalisation 30. Ce module générateur de symboles 30 permet aussi d'orienter le faisceau lumineux produit par le module d'illumination 26, 28 suivant une direction générale D1, ledit faisceau lumineux étant délimité par un premier angle α, par rapport à l'axe longitudinal du véhicule 10, et par un second angle γ par rapport à l'axe longitudinal du véhicule 10. Cette direction D1 est orientée vers l'arrière et située en dehors du champ de vision CV du conducteur 14.

Le dispositif de signalisation 24 est prévu pour afficher au moins un symbole lumineux dans la zone de rétrovision, ledit symbole lumineux étant destiné à être vu exclusivement par des observateurs 15 autres que le conducteur 14 du véhicule 10 principal, par exemple les conducteurs 15 d'autres véhicules 11 susceptibles d'être influencés par le comportement du véhicule 10 principal. Le symbole lumineux est donc prévu pour s'afficher en superposition avec l'image réfléchie par le miroir 16, dans la zone d'affichage définie par le miroir 16. Ce dispositif de signalisation 24 permet de préserver la fonction de rétrovision sans aucune dégradation.

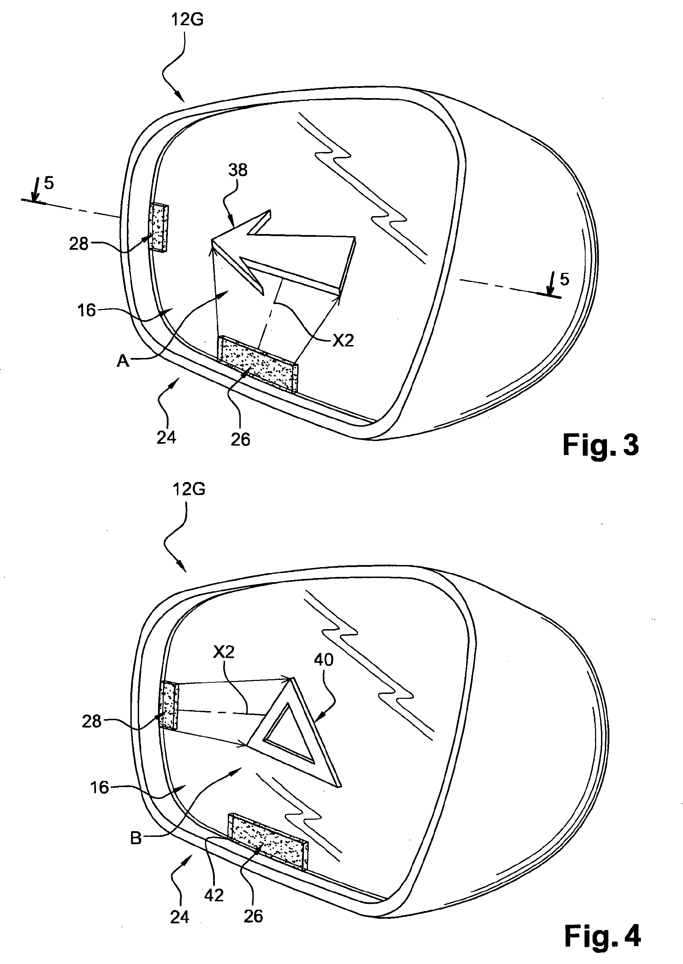

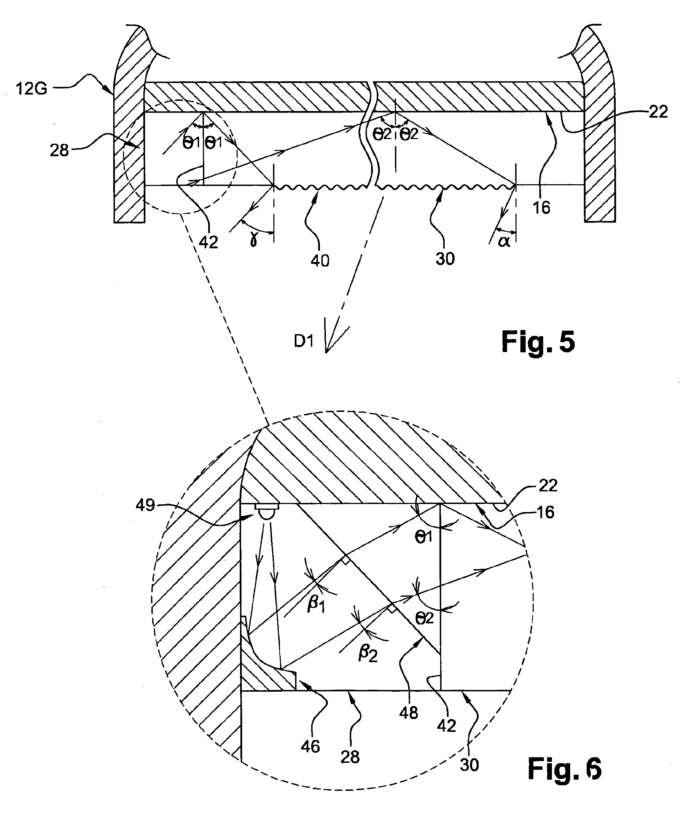

Selon le mode de réalisation représenté, le dispositif de signalisation 24 comporte deux modules d'illumination 26, 28 en vue de permettre l'affichage de deux symboles lumineux distincts A, B correspondant de préférence à un signal de changement de direction, tel qu'une flèche (figure 3), et un signal d'allumage des feux de stop du véhicule 10, tel qu'un triangle (figure 4). Les modules d'illumination 26, 28 contiennent chacun une source lumineuse 49 (par exemple une diode électroluminescente) qui est reliée électriquement à une unité électronique de contrôle (non représentée) du véhicule 10 qui déclenche son allumage de manière adéquate. Comme représenté sur les figures 5 et 6, ces modules d'illumination 49 permettent d'orienter la lumière produite par la source 49 vers le module générateur de symboles 30 en passant par le bord 42 de celui-ci.

Conformément aux enseignements de l'invention, le module générateur de symboles 30, qui est une plaque complètement transparente recouvrant complètement le miroir 16 et sa surface face arrière réfléchissante 22, comporte une superposition de réseaux diffractifs 38, 40 qui s'étendent sur la face principale de la plaque orientée vers l'arrière.

Selon le mode de réalisation représenté, le module générateur de symboles 30 comporte deux réseaux diffractifs 38, 40, le premier réseau diffractif 38 coopère avec le premier module d'illumination 26 pour générer le premier symbole de signalisation A et le deuxième réseau diffractif 40 coopère avec le second module d'illumination 28 pour générer le second symbole de signalisation B. Les réseaux diffractifs 38, 40 sont de préférence agencés dans la même zone centrale du rétroviseur 12 de sorte qu'ils se chevauchent au moins partiellement, les éléments optiques diffractifs formant les réseaux diffractifs 38, 40 étant multiplexés à la surface du module générateur de symboles 30.

Conformément aux enseignements de l'invention, le faisceau lumineux produit par chaque module d'illumination 26, 28 entre dans le module générateur de symboles 30 par son bord périphérique externe 42 avant d'être ensuite diffracté suivant la direction D1, dans un secteur angulaire défini par les angles α et γ, par les réseaux diffractifs 38, 40 pour former les symboles de signalisation A et B associés. Ces symboles de signalisation A, B sont formés ici d'hologrammes, grâce à une méthode d'enregistrement adaptée des réseaux diffractifs 38, 40, ce qui permet d'afficher des symboles de signalisation A, B en trois dimensions.

Avantageusement, les modules d'illumination 26 et 28 comportent chacun une interface optique, qui est représentée schématiquement sur les figures 5 et 6, et qui est agencée entre la source lumineuse 49 et le bord périphérique externe 42 du module générateur de symboles 30 pour collecter les rayons lumineux émis par la source lumineuse 49 et les propager à travers le bord périphérique externe 42 dans le volume du module générateur de symboles 30 de façon à éclairer la surface réfléchissante 22. Cette lumière est ensuite réfléchie par la surface réfléchissante 22, selon des angles θ₁, θ₂, et traverse après le module 30 pour être diffractée par le réseau diffractif 38, 40 selon les angles α et γ. Ce mode d'illumination a pour avantage de ne pas affecter l'architecture mécanique du rétroviseur 12 et de ne pas augmenter son encombrement mécanique. Ce qui permet d'avoir un système compact et peu couteux.

Selon le mode de réalisation représenté sur les figures 5 et 6, en relation avec le second module d'illumination 28, l'interface optique de ce module 28 est composée d'un réflecteur 46 dont la surface intérieure est une partie d'un paraboloïde. Ce réflecteur 46 permet de collecter les rayons lumineux émis par la source 49 et de les diriger vers un prisme 48 adjacent au bord périphérique externe 42 du module générateur de symboles 30 de manière que la majorité des rayons lumineux pénètre dans le volume du module générateur de symboles 30 pour qu'ils soient d'abord réfléchis par la surface réfléchissante 22 du miroir 16 et finalement diffractés par le second réseau diffractif 40. Le réflecteur 46 permet de diriger les rayons lumineux sur le prisme 48 de sorte qu'ils décrivent un angle aigu β₁, β₂ par rapport à la normale à la surface d'entrée du prisme 48 ce qui assure une réfraction quasi totale de la lumière à l'intérieur du prisme 48. Cette illumination permet de maintenir un mode de fonctionnement en transmission du module générateur de symboles 30 tout en gardant un encombrement très compact.

On note que chaque module d'illumination 26, 28 est prévu pour que les rayons lumineux de la source lumineuse 49 correspondante ne coopèrent qu'avec le réseau diffractif 38, 40 associé.

De manière avantageuse, les modules d'illumination 26, 28 sont agencées sur le bord périphérique externe 42 du module générateur de symboles 30 de manière que leurs faisceaux d'éclairage respectifs illuminent les réseaux diffractifs 38, 40 correspondants suivant deux directions générales X1, X2 (figures 3 et 4) distinctes et non parallèles et qui correspondent aux angles considérés lors de la réalisation du réseau diffractif 38, 40 correspondant à chacun des symboles de signalisation A, B. A cet effet, comme on peut le voir sur les figures 3 et 4, le premier module d'illumination 26 est agencé sur le bord inférieur du module générateur de symboles 30, et le second module d'illumination 28 est agencé sur un bord latéral du module générateur de symboles 30.

Selon l'exemple de réalisation représenté, les modules d'illumination 26, 28 sont agencés dans des encoches complémentaires formées dans la plaque constituant le module générateur de symboles 30. Selon des variantes de réalisation, les modules d'illumination 26, 28 pourrait être agencés hors de la plaque, contre son bord externe 42.

Le fonctionnement de l'invention est le suivant. Lorsque le conducteur 14 déclenche son clignotant gauche pour indiquer un changement de direction vers la gauche, l'unité électronique commande l'allumage du premier module d'illumination 26 ce qui provoque l'affichage du symbole lumineux A de changement de direction sur le rétroviseur gauche 12G. Le conducteur 14 ne voit pas ce signal dans le rétroviseur 12G car le faisceau est diffracté en dehors du champ de vision CV du conducteur 14 pour lui permettre de conserver une bonne rétrovision.

Lorsque le conducteur 14 appuie sur la pédale de frein, les feux de stop du véhicule s'allument et le second symbole lumineux B s'affiche sur les deux rétroviseurs 12G, 12D de la même manière que pour le premier symbole A en allumant cette fois le second module d'illumination 28.

L'obtention du module générateur de symboles 30 qui comporte une superposition de réseaux diffractifs 38, 40, dont chacun correspond à un symbole lumineux A, B, passe par plusieurs étapes.

La première étape consiste à enregistrer un par un les symboles A, B souhaités. Pour cela il faut générer le symbole A, B par un afficheur de très grand contraste (type LCD ou autre). Le faisceau laser expansé éclaire l'afficheur et le symbole A, B est alors projeté sur un écran diffusant. L'interférence entre cette lumière et un deuxième faisceau laser est enregistrée. Cette opération doit être répétée un nombre de fois égal au nombre de symboles A, B désirés. Un réseau diffractif 38, 40 séparé est alors obtenu à chaque enregistrement. Ensuite, on utilise un faisceau laser qui éclaire le réseau diffractif primaire. Le symbole A, B enregistré est alors restitué sous forme d'image dans l'espace. Une plaque holographique est alors positionnée à l'endroit où l'image diffractée est nette. On utilise un deuxième faisceau laser qui interfère avec la lumière de l'image diffractée. Cette interférence est enregistrée dans la plaque holographique ce qui correspond à un réseau diffractif en relief qu'on appelle le réseau diffractif de transfert. On répète cette opération sur la même plaque holographique en changeant à chaque fois l'angle d'attaque du faisceau de référence et le réseau diffractif primaire ayant le symbole A, B correspondant. Cette opération est répétée autant de fois que le nombre de symboles A, B à enregistrer. Le réseau diffractif 38, 40 final obtenu est un élément en relief contenant tous les symboles avec un angle associé à chacun. Cet élément sera utilisé pour le transfert sur un milieu transparent (plastique par exemple).

Ce module générateur de symboles 30 peut aussi être obtenu numériquement en réalisant un hologramme généré par ordinateur. Pour cela la figure d'interférence correspondant à chaque symbole A, B est à générer. Ensuite, en utilisant un moyen de micro-fabrication, les figures d'interférence sont transférées sous forme de relief sur un même master. Ce master est dans la suite utilisé pour produire (en masse) le module générateur de symboles 30 sur un milieu transparent comme le plastique par exemple.

On note que l'utilisation de la technologie présentée dans cette invention permet d'obtenir des signaux lumineux tridimensionnels A, B qui sont plus facilement visibles par les observateurs extérieurs au véhicule. Aussi, les réseaux diffractifs en surface (relief) permettent d'assurer une efficacité optique très élevée et par conséquence une perte énergétique minimale. D'où un intérêt majeur du produit avec la possibilité d'utiliser une seule source lumineuse de faible luminosité par symbole et utiliser toute sa puissance pour la création du symbole d'affichage.

D'autres variantes de réalisation de l'invention peuvent être envisagées. Comme expliqué précédemment, le système de signalisation présenté dans cette invention n'est pas limité à l'affichage de deux symboles de signalisation. Il peut s'étendre à un nombre supérieurs de symboles sans affecter l'encombrement du rétroviseur et sans dégrader la fonction de rétrovision.

## Revendications

1. Dispositif de signalisation (24) prévu pour être agencé sur l'élément réflectif (16) formant miroir d'un dispositif de rétrovision (12), notamment d'un véhicule motorisé (10), le dispositif de rétrovision (12) permettant à un utilisateur principal (14) d'observer par réflexion une zone située en arrière du dispositif de rétrovision (12), le dispositif de signalisation (24) comprenant au moins un module d'illumination (26, 28) et au moins un dispositif optique (30) permettant d'orienter le faisceau lumineux produit par le module d'illumination (26, 28) suivant une direction déterminée orientée vers l'arrière et située en dehors du champ de vision (CV) de l'utilisateur principal (14) en vue d'afficher au moins un premier symbole lumineux de signalisation (A) dans la zone de rétrovision définie par le dispositif de rétrovision (12), ledit premier symbole lumineux (A) étant destiné à être vu exclusivement par des observateurs (15) autres que l'utilisateur principal (14),
**caractérisé en ce que** :
- le dispositif optique (30) comporte un module générateur de symboles (30) qui est pourvu d'au moins un réseau diffractif (38) prévu pour former une image lumineuse correspondant au premier symbole lumineux (A) lorsque le module d'illumination (26) est allumé, ledit module générateur de symboles (30) étant globalement transparent et ledit réseau diffractif (38) étant réalisé à la surface dudit module générateur de symboles (30) sans en affecter sa transparence, et
- le module d'illumination (26) est agencé par rapport au module générateur de symboles (30) de manière que le faisceau lumineux entre dans le module générateur de symboles (30) par son bord périphérique externe (42) avant d'être ensuite diffracté vers l'arrière par le réseau diffractif (38) pour former le premier symbole lumineux (A).

2. Dispositif de signalisation (24) selon la revendication précédente, **caractérisé en ce que** le module d'illumination (26) comporte une interface optique (46, 48) qui est agencée entre une source lumineuse (49) et le bord périphérique externe (42) du module générateur de symboles (30), ladite interface optique (46, 48) collectant les rayons lumineux émis par la source lumineuse (49) et les propageant à travers le bord périphérique externe (42).

3. Dispositif de signalisation (24) selon la revendication précédente, **caractérisé en ce que** l'interface optique comporte un réflecteur (46) qui collecte les rayons lumineux émis par la source lumineuse (49) et qui les dirige vers un prisme (48) adjacent au bord périphérique externe (42) du module générateur de symboles (30).

4. Dispositif de signalisation (24) selon l'une quelconque des revendications précédentes, **caractérisé en ce que** :
- le module générateur de symboles (30) comporte au moins un premier et un second réseaux diffractifs (38, 40) correspondant respectivement à un premier et un second symboles lumineux (A, B), et
- le dispositif de signalisation (24) comporte un premier et un second modules d'illumination (26, 28) qui produisent respectivement un premier et un second faisceaux lumineux entrant dans le module générateur de symboles (30) suivant une première et une seconde directions (X1, X2) distinctes non parallèles, le premier et le second faisceaux lumineux coopérant respectivement avec le premier et le second réseaux diffractifs (38, 40) pour produire respectivement le premier et le second symboles lumineux (A, B).

5. Dispositif de signalisation (24) selon la revendication précédente, **caractérisé en ce que** les deux réseaux diffractifs (38, 40) comportent au moins une zone de recouvrement à la surface du module générateur de symboles (30) de manière que les deux symboles lumineux (A, B) associés puissent être affichés au moins en partie dans la même zone du module générateur de symboles (30).

6. Dispositif de signalisation (24) selon l'une quelconque des revendications précédentes, **caractérisé en ce que** chaque réseau diffractif (38, 40) est réalisé en relief par un processus d'enregistrement analogique d'interférences.

7. Dispositif de signalisation (24) selon la revendication précédente, **caractérisé en ce que** chaque réseau diffractif (38, 40) est réalisé à partir d'une figure d'interférence générée par ordinateur et qui correspond à la combinaison des interférences correspondant au symbole lumineux (A, B) à générer.

8. Dispositif de signalisation (24) selon la revendication 6, **caractérisé en ce que** chaque réseau diffractif (38, 40) est généré par ordinateur et implémenté sur le milieu transparent formant le module générateur de symboles (30) par des techniques de micro-fabrication.

9. Dispositif de signalisation (24) selon l'une quelconque des revendications précédentes, **caractérisé en ce que** le module générateur de symboles (30) est réalisé en plastique transparent et **en ce que** le réseau diffractif (38, 40) est réalisé sur la surface dudit module générateur de symboles (30) par embossage ou injection plastique.

10. Dispositif de rétrovision (12) de véhicule terrestre à moteur **caractérisé en ce qu'**il est équipé d'un dispositif de signalisation (24) selon l'une quelconque des revendications précédentes, le module générateur de symboles (30) étant agencé sur la face externe (22) de l'élément réflectif (16).

11. Dispositif de rétrovision (12) selon la revendication précédente, **caractérisé en ce que** le symbole lumineux (A) associé au premier réseau diffractif (38) correspond à une indication de changement de direction du véhicule.

12. Dispositif de rétrovision (12) selon la revendication 10 prise en combinaison avec la revendication 4, **caractérisé en ce que** le symbole lumineux (B) associé au second réseau diffractif (28) correspond à une indication d'allumage des feux de stop du véhicule.

## Patentansprüche

1. Signalisierungsvorrichtung (24), die dafür vorgesehen ist, an das reflektierende Spiegelelement (16) einer Rückblickeinrichtung (12), insbesondere eines motorisierten Fahrzeugs (10), angeordnet zu werden, wobei die Rückblickeinrichtung (12) es einem Hauptnutzer (14) gestattet, einen hinter der Rückblickeinrichtung (12) gelegenen Bereich durch Reflexion zu betrachten, wobei die Signalisierungsvorrichtung (24) zumindest ein Beleuchtungsmodul (26, 28) und zumindest eine optische Vorrichtung (30) aufweist, wodurch es möglich ist, das von dem Beleuchtungsmodul (26, 28) erzeugte Lichtbündel in einer bestimmten Richtung auszurichten, die nach hinten gerichtet ist und außerhalb des Sichtfeldes (CV) des Hauptnutzers (14) liegt, um zumindest ein erstes Signalisierungs-Lichtzeichen (A) im von der Rückblickeinrichtung (12) definierten Rückblickbereich anzuzeigen, wobei das erste Lichtzeichen (A) dazu bestimmt ist, ausschließlich von anderen Betrachtern (15) als dem Hauptnutzer (14) gesehen zu werden,
**dadurch gekennzeichnet, dass**
- die optische Vorrichtung (30) ein Modul (30) zum Erzeugen von Zeichen enthält, das mit zumindest einem Beugungsgitter (38) versehen ist, das dazu vorgesehen ist, ein Lichtbild entsprechend dem ersten Lichtzeichen (A) dann zu bilden, wenn das Beleuchtungsmodul (26) eingeschaltet ist, wobei das Modul (30) zum Erzeugen von Zeichen insgesamt transparent ausgeführt ist und das Beugungsgitter (38) an der Oberfläche des Moduls (30) zum Erzeugen von Zeichen ausgebildet ist, ohne dessen Transparenz zu beeinträchtigen, und
- das Beleuchtungsmodul (26) bezüglich des Zeichenerzeugungsmoduls (30) so angeordnet ist, dass das Lichtbündel in das Zeichenerzeugungsmodul (30) über seinen äußeren Umfangsrand (42) eintritt, bevor es anschließend über das Beugungsgitter (38) nach hinten gebeugt wird, um das erste Lichtzeichen (A) zu bilden.

2. Signalisierungsvorrichtung (24) nach dem vorangehenden Anspruch, **dadurch gekennzeichnet, dass** das Beleuchtungsmodul (26) eine optische Schnittstelle (46, 48) aufweist, die zwischen einer Lichtquelle (49) und dem äußeren Umfangsrand (42) des Zeichenerzeugungsmodul (30) angeordnet ist, wobei die optische Schnittstelle (46, 48) Lichtstrahlen, die von der Lichtquelle (49) ausgestrahlt werden, sammelt und durch den äußeren Umfangsrand (42) hindurch verbreitet.

3. Signalisierungsvorrichtung (24) nach dem vorangehenden Anspruch, **dadurch gekennzeichnet, dass** die optische Schnittstelle einen Reflektor (46) aufweist, der die von der Lichtquelle (49) ausgestrahlten Lichtstrahlen sammelt und zu einem Prisma (48) lenkt, das an den äußeren Umfangsrand (42) des Zeichenerzeugungsmoduls (30) angrenzt.

4. Signalisierungsvorrichtung (24) nach einem der vorangehenden Ansprüche, **dadurch gekennzeichnet, dass**:
- das Modul (30) zum Erzeugen von Zeichen zumindest ein erstes und ein zweites Beugungsgitter (38, 40) aufweist, die einem ersten bzw. einem zweiten Lichtzeichen (A, B) entsprechen, und
- die Signalisierungsvorrichtung (24) ein erstes und ein zweites Beleuchtungsmodul (26, 28) aufweist, die ein erstes bzw. ein zweites Lichtbündel erzeugen, das in das Zeichenerzeugungsmodul (30) in einer ersten bzw. einer zweiten Richtung (X1, X2) eintritt, die voneinander verschieden sind und nicht parallel verlaufen, wobei das erste und das zweite Lichtbündel mit dem ersten bzw. mit dem zweiten Beugungsgitter (38, 40) zusammenwirken, um das erste bzw.
das zweite Lichtzeichen (A, B) zu erzeugen.

5. Signalisierungsvorrichtung (24) nach dem vorangehenden Anspruch, **dadurch gekennzeichnet, dass** die beiden Beugungsgitter (3 8, 40) zumindest einen Überdeckungsbereich an der Oberfläche des Zeichenerzeugungsmoduls (30) aufweisen, so dass die beiden entsprechenden Lichtzeichen (A, B) zumindest teilweise in dem selben Bereich des Zeichenerzeugungsmodul (30) angezeigt werden können.

6. Signalisierungsvorrichtung (24) nach einem der vorangehenden Ansprüche, **dadurch gekennzeichnet, dass** jedes Beugungsgitter (38, 40) durch einen analogen Prozess zum Erfassen von Interferenzen reliefartig ausgebildet ist.

7. Signalisierungsvorrichtung (24) nach dem vorangehenden Anspruch, **dadurch gekennzeichnet, dass** jedes Beugungsgitter (38, 40) ausgehend von einem Interferenzmuster gebildet ist, das durch Computer erzeugt wird und der Kombination von Interferenzen entspricht, die den zu erzeugenden Lichtzeichen (A, B) entsprechen.

8. Signalisierungsvorrichtung (24) nach Anspruch 6, **dadurch gekennzeichnet, dass** jedes Beugungsgitter (38, 40) durch Computer erzeugt wird und durch Mikroherstellungstechniken auf das transparente Medium, welches das Modul (30) zum Erzeugen von Zeichen bildet, implementiert wird.

9. Signalisierungsvorrichtung (24) nach einem der vorangehenden Ansprüche, **dadurch gekennzeichnet, dass** das Modul (30) zum Erzeugen von Zeichen aus transparentem Kunststoff herstellt ist und dass das Beugungsgitter (3 8, 40) durch Hohlprägen oder Kunststoffspritzen an der Fläche des Zeichenerzeugungsmodul (30) ausgebildet ist.

10. Rückblickeinrichtung (12) für Motor-Landfahrzeuge, **dadurch gekennzeichnet, dass** sie mit einer Signalisierungseinrichtung (24) nach einem der vorangehenden Ansprüche ausgestattet ist, wobei das Modul (30) zum Erzeugen von Zeichen an der Außenseite (22) des reflektierenden Elements (16) angeordnet ist.

11. Rückblickeinrichtung (12) nach dem vorangehenden Anspruch, **dadurch gekennzeichnet, dass** das Lichtzeichen (A), das dem ersten Beugungsgitter (3 8) zugeordnet ist, einem Hinweis auf Richtungsänderung des Fahrzeugs entspricht.

12. Rückblickeinrichtung (12) nach Anspruch 10 in Kombination mit Anspruch 4, **dadurch gekennzeichnet, dass** das Lichtzeichen (B), das dem zweiten Beugungsgitter (28) zugeordnet ist, einem Hinweis auf eingeschaltete Bremsleuchten des Fahrzeugs entspricht.

## Claims

1. Signalling device (24) designed to be arranged on the reflective element (16) forming a mirror of a rear-view device (12) allowing a main user (14) to observe by reflection a zone situated to the rear of the rear-view device (12), the signalling device (24) comprising at least one illumination unit (26, 28) and at least one optical device (30) permitting orientation of the light beam produced by the illumination unit (26, 28) in a determined direction orientated towards the rear and situated outside the field of view (CV) of the main user (14) in order to display at least a first luminous signalling symbol (A) in the rear-view zone defined by the rear-view device (12), the said first luminous symbol (A) being intended to be seen exclusively by observers (15) other than the main user (14),
**characterised by** the fact that:
- the optical device (30) includes a symbol generation unit (30) which is provided with at least one diffraction grating (38) intended to form a luminous image corresponding to the first luminous symbol (A) when the illumination module (26) is lit, the said symbol generation unit (30) being generally transparent and the said diffraction grating (38) being formed on the surface of the said symbol generation unit (30) without affecting its transparency, and
- the illumination unit (26) is so arranged relative to the symbol generation unit (30) that the light beam enters the symbol generation unit (30) through its outer peripheral edge (42) before then being diffracted towards the rear by the diffraction grating (3 8) to form the first luminous symbol (A).

2. Signalling device (24) as described in the preceding claim, **characterised by** the fact that the illumination unit (26) includes an optical interface (46, 48) which is arranged between a light source (49) and the outer peripheral edge (42) of the symbol generation unit (30), the said optical interface (46, 48) collecting the light rays emitted by the light source (49) and propagating them through the outer peripheral edge (42).

3. Signalling device (24) as described in the preceding claim, **characterised by** the fact that the optical interface includes a reflector (46) which collects the light rays emitted by the light source (49) and which directs them towards a prism (48) adjacent to the outer peripheral edge (42) of the symbol generation unit (30).

4. Signalling device (24) as described in any one of the preceding claims, **characterised by** the fact that:
- the symbol generation unit (30) includes at least a first and a second diffraction grating (38, 40) corresponding respectively to a first and a second luminous symbol (A, B), and
- the signalling device (24) includes a first and a second illumination unit (26, 28) which respectively produce a first and a second light beam entering the symbol generation unit (30) in first and second distinct and non-parallel directions (X1, X2), the first and second light beams co-operating respectively with the first and second diffraction gratings (38, 40) to produce respectively the first and second luminous symbols (A, B).

5. Signalling device (24) as described in the preceding claim, **characterised by** the fact that the two diffraction gratings (3 8, 40) include at least one overlapping zone on the surface of the symbol generation unit (30) so that the two associated luminous symbols (A, B) can be displayed at least partially in the same zone of the symbol generation unit (30).

6. Signalling device (24) as described in any one of the preceding claims, **characterised by** the fact that each diffraction grating (3 8, 40) is formed in relief by a process for analogue recording of interferences.

7. Signalling device (24) as described in the preceding claim, **characterised by** the fact that each diffraction grating (3 8, 40) is formed from a computer-generated interference figure which corresponds to the combination of the interferences corresponding to the light symbol (A, B) to be generated.

8. Signalling device (24) as described in claim 6, **characterised by** the fact that each diffraction grating (3 8, 40) is computer-generated and implemented on the transparent medium forming the symbol generation unit (30) by micromanufacturing techniques.

9. Signalling device (24) as described in any one of the preceding claims, **characterised by** the fact that the symbol generation unit (30) is formed of transparent plastics and by the fact that the diffraction grating (3 8, 40) is formed on the surface of the said symbol generation unit (30) by embossing or plastics injection.

10. Ground motor vehicle rear-view device (12) **characterised by** the fact that it is provided with a signalling device (24) as described in any one of the preceding claims, the symbol generation unit (30) being arranged on the outer face (22) of the reflective element (16).

11. Rear-view device (12) as described in the preceding claim, **characterised by** the fact that the luminous symbol (A) associated with the first diffraction grating (3 8) corresponds to an indication of change of direction of the vehicle.

12. Rear-view device (12) as described in claim 10 taken in combination with claim 4, **characterised by** the fact that the luminous symbol (B) associated with the second diffraction grating (28) corresponds to an indication of lighting of the stoplights of the vehicle.
